Europäisches Patentamt

European Patent Office

Office européen des brevets

(11) Veröffentlichungsnummer: **0 110 812**
**B1**

## (12) EUROPÄISCHE PATENTSCHRIFT

(45) Veröffentlichungstag der Patentschrift:
13.01.88

(51) Int. Cl.⁴: **A 01 D 34/66**

(21) Anmeldenummer: 83710077.5

(22) Anmeldetag: 04.11.83

(54) Tellermähwerk.

(30) Priorität: 24.11.82 DE 3243351

(43) Veröffentlichungstag der Anmeldung:
13.06.84 Patentblatt 84/24

(45) Bekanntmachung des Hinweises auf die Patenterteilung:
13.01.88 Patentblatt 88/2

(84) Benannte Vertragsstaaten:
DE FR GB NL

(56) Entgegenhaltungen:
AT-B-291 653
AT-B-300 435
DE-A-2 653 224

(73) Patentinhaber: Friedrich Mörtl Schleppergerätebau
GmbH & Co. KG, Kesslerstrasse 2, D-8780
Gemünden (DE)

(72) Erfinder: Grenzebach, Hans, Spessartweg 29,
D-8780 Gemünden (DE)
Erfinder: Grenzebach, Roland, Am Neuberg 11,
D-8780 Gemünden (DE)
Erfinder: Mörtl, Friedrich, Dip.- Ing., Am Neuberg
12, D-8780 Gemünden (DE)

(74) Vertreter: Patentanwälte Dipl.- Ing. Rudolf
Bibrach Dipl.- Ing. Elmar Rehberg, Postfach 1453
Pütterweg 6, D-3400 Göttingen (DE)

**Beschreibung**

Die Erfindung betrifft ein Tellermähwerk mit über ineinandergreifende Zahnräder angetriebenen Mähtellern, die an ihrem Umfang durch Zentrifugalkräfte nach außen gerichtete Messer tragen, und mit einem mit einem Rahmen verbundenen Tragbalken, der eine Wanne und einen die Lagerung der Zahnräder bzw. der Mähteller tragenden Deckel aufweist und ein Schmiermittelbad aufnimmt, wobei sowohl die in Fahrtrichtung nach vorn weisende Kante des Tragbalkens als auch die rückwärtige Kante des Tragbalkens im wesentlichen geradlinig verlaufen. Derartige Tellermähwerke dienen dem Mähen von Gras und anderen Futtermitteln bzw. Pflanzen, wobei das Tellermähwerk im Frontanbau oder auch im seitlich ausragenden Heckanbau mit einem Schlepper verbindbar ist und von diesem getragen, geführt und angetrieben wird.

Ein Tellermähwerk der eingangs beschriebenen Art ist aus der AT-B-291 653 bekannt. Der Antrieb kann über ineinandergreifende Zahnräder vonstatten gehen, wobei jeder Mähteller mit einem Antriebszahnrad verbunden ist und zwischen den Antriebszahnrädern Zwischenzahnräder vorgesehen sind, die keine Mähteller tragen, sondern nur der Übertragung des Drehantriebes auf die mehreren nebeneinander an dem Tragbalken gelagerten Mähteller dienen. Je nach der Art der Anzahl der zwischen zwei Antriebszahnrädern eingeschalteten Zwischenräder bekommen benachbarte Mähteller gleiche oder entgegengesetzt gerichtete Drehrichtung. Der bekannte Tragbalken ist am Rahmen, der der Aufhängung am Schlepper dient, waagerecht ausgerichtet angeordnet und besteht aus einer Wanne und einem Deckel, die in grundsätzlich ähnlicher Formgebund mit etwa U-förmigem Querschnitt beide etwa gleich weit tiefgezogen sind, so daß der für den dichten Verschluß des Tragbalkens gebildete Doppelrand etwa in der horizontalen Symmetrieebene des Tragbalkens angeordnet ist. Dabei verläuft also die nach vorn weisende Kante des Tragbalkens in Form des Doppelrandes im wesentlichen geradlinig. Gleiches gilt für die rückwärtige Kante des Tragbalkens. Damit läßt sich der Tragbalken vergleichsweise einfach herstellen. Er bekommt somit die erforderliche Stabilität. Die Zahnräder sind im Deckel gelagert. Die nach oben den Deckel durchsetzenden Wellenstummel der Antriebszahnräder tragen die Mähteller. Für die Abstützung des Trabgalkens auf der inneren Seite ist ein Innenschuh vorgesehen, in dessen wirkbereich jedoch keine Schnittarbeit verrichtet wird. Nachteilig ist, daß die Wanne des Tragbalkens direkt auf dem Boden schleift und einem vergleichsweise hohen Verschleiß ausgesetzt ist, so daß nach entsprechender Schnittzeit die Wanne ausgetauscht werden muß. Die Wanne ist im übrigen im Bereich des Doppelrandes stufig abgekantet ausgebildet.

Auch der Deckel besitzt eine solche stufige Abkantung, so daß insgesamt hierdurch eine beachtliche Stirnfläche des Tragbalkens entsteht, der nicht nur einen erhöhten Widerstand an den zu mähenden Pflanzen findet, sondern an dem sich keilförmig nach vorn ragend Erde aufbaut. Dieser Erdkeil kann je nach dem Vorhandensein an die Wanne anstoßender Erde und der Art und Weise derselben sowie deren Feuchtigkeit schneller oder langsamer wachsen, wobei sich der Erdkeil nach vorn aufbaut. Die Erde muß nicht unbedingt von Maulwurfshügeln in einer Wiese herstammen, sondern kann z. B. auch von den Mähtellern bzw. -messern aufgewirbeltes Erdreich sein. Besonders nachteilig wirkt sich dieser sich aufbauende Erdkeil an der Überschneidungsstelle der Schnittkreise benachbarter Messer vor dem Doppelrand des Trägerbalkens aus. Hier schneiden die Messer zwar auch vor der Vorderkante des Tragbalkens, jedoch in geringster Entfernung zu ihr. Ein sich hier aufbauender Erdkeil führt dazu, daß die zu mähenden Pflanzen, das Gras o. dgl. von dem Erdkeil nach vorn umgedrückt werden, so daß sie genau dort, wo sie von den Schneidmessern abgeschnitten werden sollten, von diesen nicht erfaßt werden. Je nach der Größe des Erdkeils bilden sich beim Mähen an dieser Überschneidungsstelle Streifen aus, die bei relativ kleinem Erdkeil nur darin bestehen können, daß die Pflanzen vergleichsweise höher abgeschnitten sind. Ragt dagegen der Erdkeil sehr weit nach vorn vor, dann kann es vorkommen, daß Pflanzen oder Gräser in diesem Bereich überhaupt nicht abgeschnitten werden, so daß ein entsprechender Streifen stehenbleibt, während vor den Mähscheiben im Bereich der Antriebsräder ein ordnungsgemäßer Schnitt erfolgt.

Aus der AT-B-300 435 ist ein Tellermähwerk der eingangs beschriebenen Art bekannt, bei dem die vordere und die hintere Kante des Tragbalkens geradlinig und parallel zueinander verlaufen. Die Antriebszahnräder und die Zwischenzahnräder sind ohne Versatz zueinander fluchtend am Tragbalken vorgesehen. Vor den Tragbalken sind Blechsegmente zum Schutze der Mähscheiben angeordnet, die den Mähscheibenteil, der über den Tragbalken nach vorn hinausragt, von unten abdeckt. Nur die Schneidkanten der Messer ragen demgegenüber vor. Dieser geradlinig und mit Rechteckprofil ausgestattete Tragbalken kann nun gemäß dem Ausführungsbeispiel der Fig. 2 und 4 der AT-B-300 435 so weitergebildet werden, daß die geradlinige Form des Tragbalkens verlassen wird und dieser hinsichtlich des Bodens und des Deckels nach vorn unter den Mähtellern vorragende Schutzteile bekommt. Damit wird der Tragbalken zwar erheblich komplizierter in seiner Ausbildung und Herstellung, jedoch bietet sich die Möglichkeit, die Antriebszahnräder nach vorn gegenüber den Zwischenzahnrädern versetzt anzuordnen. Diese nach vorn vorragenden Schutzteile dienen zwei Zwecken. Einmal soll die Unterseite der Mähteller geschützt werden und zum anderen soll durch die zwischen den Schutzteilen sich ergebenden Einbuchtungen der Überlappungsbereich der Messer freigehalten bleiben. Ein derart kompliziert geformter Tragbalken mit seinem Boden und Deckel ist aufwendig und läßt sich vergleichsweise schwierig herstellen. Zwischen den Schutzteilen ergeben sich Ausbuchtungen, die sich im wesentlichen von vorn nach hinten erstrecken. Diesen Ausbuchtungen wird jedoch keine besondere wirkung zugeschrieben. Das Problem des Durchtritts von Erde unter dem Tragbalken wird nicht erkannt und nicht behandelt. Es wird sogar zugelassen, in diesen Ausbuchtungen Führungen anzuordnen, die die Ausbuchtungen nach unten gerade versperren.

Aus der DE-A-2 653 224 ist ein Tellermähwerk bekannt, bei dem der Tragbalken konstanten, über die Länge durchgehenden Querschnitt aufweist. Der Tragbalken besteht aus einem im Querschnitt U-förmig tiefgezogenen Boden und einem flachen aufgesetzten Deckel. Vor diesen auf diese weise gebildeten Tragbalken ist ein durchgehender Streifen als Verschleißschutz vorgesetzt, der über seine Länge durchgehend weitgehend konstanten, teilweise rampenförmigen Querschnitt aufweist und lediglich im Bereich der Überschneidungsstellen der Messer oben Ausnehmungen aufweist, um das Überdeckungsfeld zu vergrößern. Da diese Ausnehmungen oben angeordnet sind, haben sie keinen Einfluß auf die Durchtrittsmöglichkeiten von Erde, im Gegenteil, durch die Ausnehmungen wird die zusammenhängend dargebotene senkrechte Fläche an dem Streifen vergrößert, so daß der Aufbau eines entsprechend dicken und langen Erdkeils gerade hier möglich ist. Auch ist der Streifen in diesem Bereich - also nahe an der Überschneidungsstelle der Mähteller - jeweils unter Anordnung einer Verbindungsschraube zwischen Boden und Deckel stufig ausgebildet, während der im Bereich jedes Mähtellers - also außerhalb der Überschneidungsstelle - rampenförmig ausgebildet ist. An der Überschneidungsstelle können sich daher die beschriebenen Erdkeile an den stufigen Teilen des Streifens aufhauen, also gerade dort, wo sie stört. Die Zahnräder sind ohne Versatz in Fahrtrichtung geradlinig hintereinader angeordnet. Unterhalb des Tragbalkens kann im Bereich der Antriebszahnräder eine Gleitsohle eingehängt und befestigt sein, die den Zweck hat, den Tragbalken in gewissem Abstand vom Erdboden zu führen.

Bei einem anderen Mähwerk, bei welchem Wanne und Deckel des Tragbalkens etwa symmetrisch ausgebildet sind und sich somit der Doppelrand auch etwa in der Symmetrieebene befindet, hat man versucht, die am Deckel vorhandene Stufe durch ein entgegen der Fahrtrichtung ansteigendes Winkelblech nach oben abzudecken, um auf diese Art und Weise das Aufbauen von Erdkeilen jedenfalls an dem Deckel zu verhindern. Zwar ist damit die Stirnfläche der Wanne vergleichsweise kleiner, aber an dieser können sich die beschriebenen Erdkeile immer noch aufbauen. Zusätzlich tritt aber der Nachteil ein, daß durch das Blech mehr Erde mit dem Futter nach oben über den Tragbalken hinweggeleitet wird. Es ergibt sich in nachteiliger Weise eine erhöhte Verschmutzung des Mähguts.

Der Erfindung liegt die Aufgabe zugrunde, ein Tellermähwerk der eingangs beschriebenen Art aufzuzeigen, bei dem die Neigung zum Aufbauen von Erdkeilen insbesondere an der Überschneidungsstelle der Schnittkreise der Messer vor dem Tragbalken erheblich gemindert ist, so daß die Streifenbildung beim Mähen praktisch in Fortfall kommt. Das Erdreich soll möglichst ansatzlos unter dem Tragbalken bzw. unter der Wanne insbesondere im Bereich der Überschneidungsstelle nach hinten abgeleitet werden, ohne daß eine erhöhte Futterverschmutzung stattfindet.

Erfindungsgemäß wird dies dadurch erreicht, daß die mit den Mähtellern starr verbundenen Antriebszahnräder in Fahrtrichtung - soweit es die stufig ausgebildete Wanne zuläßt - nach vorn und die an der Überschneidungsstelle benachbarter Messer wirksamen Zwischenzahnräder - soweit es die Wanne zuläßt - nach hinten auf dem Tragbalken versetzt angeordnet sind, und daß der von den Zwischenzahnrädern nicht überstrichene, nach vorn weisende Bereich der Wanne rampenförmig verformt und an dieser Überschneidungsstelle benachbarter Mähteller ein Freiraum für den Durchtritt von Erdreich unter der Wanne hindurch vorgesehen ist. Bei einem solchen, im wesentlichen gerade durchgehenden Tragbalken aus Wanne und Deckel ist es zunächst einmal wichtig, die Mähteller möglichst weit nach vorn zu rücken, so daß die nach vorn überstehenden Schnittkreise der Messer sehr groß werden und auch der Zwickel der Überschneidungsstelle benachbarter Messer vor dem Doppelrand des Tragbalkens möglicht groß wird, damit durch eine Schrägstellung des Tragbalkens eine möglichst geringe Schnitthöhe möglich wird. Gleichzeitig mit dieser Maßnahme müssen aber die an der Überschneidungsstelle benachbarter Messer wirksamen Zwischenzahnräder möglichst weit nach hinten versetzt werden, damit die Wanne an dieser Stelle von unten eingebeult werden kann, so daß dort ein Freiraum entsteht, der in Durchtrittsrichtung des Erdreiches gesehen möglichst groß und lang ausgebildet ist. Dabei ergibt sich dann eine sehr flache Schräglage dieser Einbeulung, so daß die beschriebenen Erdkeile hier keine geeignete Ansatzfläche mehr vorfinden, sondern das Erdreich durch den geschaffenen Freiraum vergleichsweise ungehindert gegen die Fahrtrichtung unter dem Tragbalken hindurchtreten kann. Es wird somit ein guter Erdabschluß nach hinten unter der Wanne hindurch erreicht, und zwar auch bei schwierigen Bedingungen, beispielsweise beim Auftreten von Maulwurfshügeln oder bei klebrigen Böden. Durch die beschriebene Formgebung der Einbeulungen tritt an dieser Stelle auch ein Selbstreinigungseffekt auf, weil die vorbeistreichenden Stoppeln etwa im Ansatz befindliches Erdreich wieder wegnehmen oder die infolge der außerordentlichen Schräglage der Einbeulungen geringen Adhäsionskräfte zwischen dem Erdreich und der Wanne an dieser Stelle nicht ausreichen, um die Erde dauerhaft und entgegen den beim Mähen einwirkenden Stößen und Kräften an der Einbeulung haften zu lassen. Die Streifenbildung von unabgeschnittenen Pflanzen oder ungleich hoch abgeschnittenen Pflanzen wird damit vermeiden. Es entsteht ein sauberes gleichmässiges Schnittbild. Es versteht sich, daß sich ein wellenförmiger Schnitt, bedingt durch die schräggeneigte Anordnung der Mähteller damit natürlich nicht vermeiden läßt. Als weiterer Vorteil tritt bei dem erfindungsgemäßen Tellermähwerk eine Verminderung des Kraftbedarfs ein, weil durch die Form des Tragbalkens kein Erdreich vorhergeschoben und von dem Tragbalken weggefördert werden muß. Die Erfindung läßt sich mit besonderem Vorteil bei solchen Tellermähwerken anwenden, bei denen der Antrieb über eine Reihe von ineinandergreifenden Zahnrädern auf die Mähteller übertragen werden. Die Erfindung kann jedoch auch auf solche Mähwerke übertragen werden, die mit einer durchgehenden Welle im Tragbalken oder einer Kette o. dgl. an dieser Stelle arbeiten.

Auch ein Tragbalken, der waagerecht an seinem Rahmen angeordnet ist, läßt sich über eine entsprechende Verstellung der Oberlenker des Schleppers in eine nach vorn unten geneigte Schräglage während des Mähens bringen und damit in diesem Winkel anstellen. Damit diese Schräglage auf jeden Fall ausgenutzt wird oder auf einfache Weise vergrößert wird, kann der Tragbalken auf seinem Rahmen gemäß den Merkmalen des Anspruches 2 von vornherein geneigt angeordnet sein, wobei sich eine Neigung von etwa 4° als vorteilhaft erweist. Durch diese Schräglage wird die langgezogene Einbeulung an der Wanne gleichsam noch geringer schräggestellt oder anders gesagt, die rampenförmige Einbeulung wird noch mehr der waagerechten Fläche angenähert. Die Höhe des Freiraums nimmt damit in Durchflußrichtung für das Erdreich noch weniger ab.

Bei Ausbildung des Mähbalkens gemäß den Merkmalen des Anspruches 3 entsteht der Vorteil, daß die stufig ausgebildete Wanne im Bereich der Mähteller einerseits geschützt wird und andererseits die Möglichkeit beseitigt wird, daß sich an dieser Stelle Erdkeile aufbauen können. Zwar ist die Gefahr, daß sich hier - bei nicht vorhandenen Gleitschalen - Erdkeile mit einer solchen Länge aufbauen könnten, daß sie den Schnittkreis der Messer in diesem Bereich erreichen würden, relativ gering, weil solche Erdkeile durch die Erschütterungen, Kräfte und Stöße sowieso immer wieder abgebrochen und beseitigt werden. Jedoch ergibt sich in diesem Bereich infolge der stufig ausgebildeten Wanne ein erheblicher Verschleiß an der Wanne selbst, der auf jeden Fall unerwünscht ist. Anstelle der Wanne kann viel leichter eine Gleitschale einmal ausgetauscht werden. Wenn die Kufenschale der Gleitschale so ausgebildet ist, daß deren Oberfläche an der Übergangsstelle zur Wanne mit der dem Boden zugekehrten Oberfläche der Wanne fluchtet oder sogar noch nach unten weiter vorsteht, ist der weitere Vorteil verbunden, daß bei entsprechender Schräganstellung der Mähscheiben der Freiraum unter den Einwölbungen noch größer wird. Die nach vorn gekehrte Kante der Einwölbungen vor den Zwischenrädern wird gleichsam angehoben. Dabei kann durchaus eine günstig niedrige Schnitthöhe beibehalten oder sogar noch erniedrigt werden. Die Gleitschalen haben im übrigen in diesem Bereich die Funktion, die Mähteller bei unbeabsichtigtem Anfahren an eine Hindernis zu schützen. Die Gleitschalen dürfen sich aber - entgegen ihrer relativ breiten Ausbildung im Stand der Technik - nicht bis in den Bereich der Überschneidungsstelle der Schnittkreise bzw. in den Bereich der Einwölbungen erstrecken, weil sie an dieser Stelle nur den Freiraum unter den Einwölbungen verkleinern und damit beeinträchtigen würden.

Durch die Anordnung von zusätzlichen auswechselbaren Gleitsohlen zusätzlich zu den Gleitschalen gemäß den Merkmalen des Anspruches 4 wird der wesentliche Verschleiß nicht nur von den Gleitschalen auf die Gleitsohlen verlagert, sondern es ergibt sich damit die Möglichkeit, den Tragbalken insgesamt vergleichsweise mehr anzuheben, so daß auch der unterhalb der Einbeulungen vorhandene Freiraum hierdurch zusätzlich vergrößert wird. Da diese Gleitsohlen nicht im Bereich jedes Mähtellers angeordnet werden müssen, sondern eine Anordnung innen und vielleicht zusätzlich außen ausreicht, wird ein definierter Abstand der Wanne vom Boden geschaffen, so daß an der Wanne selbst kaum noch Verschleiß auftritt. Die Vergrößerung des Freiraumes unter jeder Einwölbung führt dazu, daß das Erdreich an dieser Stelle noch leichter und schneller entgegen der Fahrtrichtung unter dem Tragbalken hindurchtreten kann.

Die Verwirklichung der Merkmale des Anspruches 5 führt schließlich dazu, daß gleichzeitig die Schnitthöhe vorteilhaft erniedrigt und der Freiraum unter der Wanne in seiner Größe mindestens erhalten bleibt oder vorzugsweise noch vergrößert werden kann. Gleichzeitig wird die Auflagefläche des Tragbalkens an der Gleitsohle durch eine solche zusätzliche Schrägstellung kleiner.

Die Merkmale des Anspruches 6 sind nützlich dafür, daß die Überschneidungsstellen und der dort unter den Einbeulungen vorhandene Freiraum ungehindert von Erdreich durchströmt werden kann, andererseits aber über wesentliche Bereiche ein ausreichend großer wirksamer Schutz für die Mähteller gegen unbeabsichtigtes Anfahren an Hindernissen eintritt.

Bei der Verwirklichung der Merkmale des Anspruches 7 stört die Befestigung der Gleitschale den Fluß des Erdreiches einerseits und den Fluß des Futters andererseits vergleichsweise wenig. Die Verwirklichung der Merkmale des Anspruches 8 ist sinnvoll, um an dieser Überschneidungsstelle eine etwa durch eine Verschraubung bewirkte Widerstands- und Aufbaufläche zusätzlich zu verkleinern, was sich günstig auf den ungehinderten Abfluß des Erdreiches unter dem Tragbalken und des Futters oberhalb des Tragbalkens auswirkt.

Die Erfindung wird anhand der Zeichnungen weiter verdeutlicht. Es zeigen:

Fig. 1 eine schematisierte Schnittdarstellung eines Schnittes durch den Tragbalken in Fahrtrichtung,

Fig. 2 eine schematisierte Draufsicht auf den Tragbalken,

Fig. 3 eine Schnittdarstellung ähnlich Fig. 1, jedoch mit präziserer Darstellung der Einzelteile,

Fig. 4 eine Draufsicht auf einen Ausschnitt des Deckels des Tragbalkens im Bereich gleichsinnig drehender benachbarter Mähteller,

Fig. 5 eine Draufsicht auf einen Ausschnitt des Deckels des Tragbalkens im Bereich gegensinnig drehender benachbarter Mähteller und

Fig. 6 eine schematisierte Darstellung verschiedener Tellermähwerke mit drei bis sechs Mähtellern.

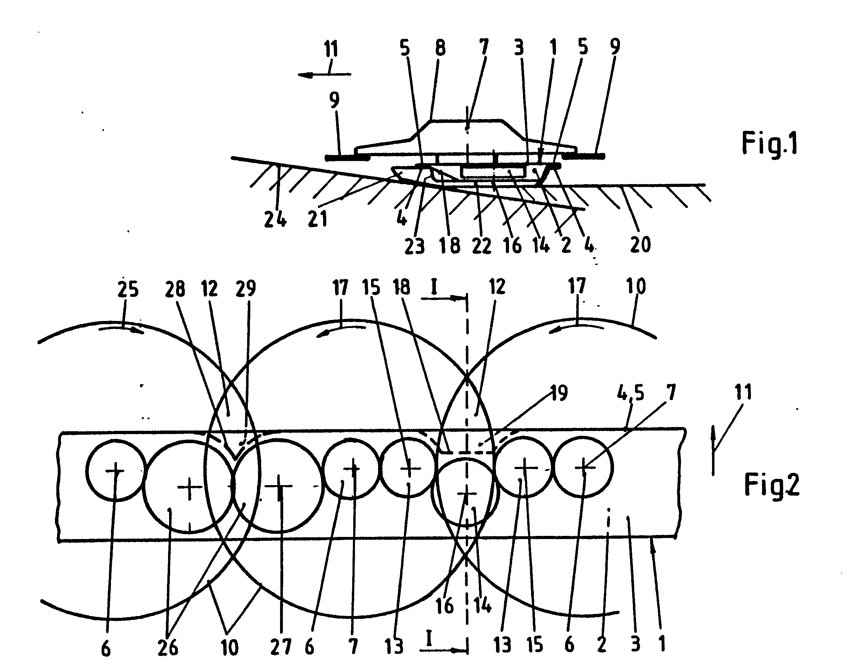

In Fig. 1 ist in sehr schematischer Weise der Tragbalken 1 des Tellermähwerks im Schnitt dargestellt, der sich aus einer Wanne 2 und einem Deckel 3 zusammensetzt. Die Wanne 2 ist etwa mit U-förmigem Querschnitt tiefgezogen und besitzt einen umlaufenden abstehenden Rand 4, der mit einem Rand 5 des Deckels 3 fluchtet, so daß an dieser Stelle ein Doppelrand 4, 5 gebildet ist, durch den unter Zwischenlage einer Dichtung der Innenraum des Tragbalkens 1 flüssigkeitsdicht absperrbar ist. Der Tragbalken 1 nimmt ein Schmiermittelbad auf, in welchem sich teilweise einragend eine ganze Anzahl ineinandergreifender Zahnräder bewegen, die am Deckel 3 bzw. zwischen Deckel 3 und Wanne 2 gelagert sind. Diese Zahnräder greifen jeweils ineinander ein und übertragen damit den Drehantrieb längs durch den gesamten Tragbalken 1 hindurch. Es sind unter den Zahnrädern Antriebszahnräder 6 vorgesehen (Fig. 2), deren Wellenstummel entsprechend der Achse 7 durch den Deckel 3 nach oben hindurchgeführt ist und je einen Mähteller 8 trägt, der beispielsweise einen kreisförmigen, elliptischen oder sonstwie geformten Umriß aufweist und auf dem Umfang mehrere Messer 9 trägt. Durch den Drehantrieb beschreiben die Messer 9 die in Fig. 2 dargestellten Schnittkreise 10, die Fahrtrichtung ist in den verschiedenen Zeichnungen durch Pfeile 11 gekennzeichnet. Vor dem nach vorne in Fahrtrichtung weisenden Doppelrand 4, 5 des Tragbalkens 1 überschneiden sich die Schnittkreise 10 der Messer 9 benachbarter Mähteller 8 in einem Zwickel, der insgesamt als Überscheidungsstelle 12 bezeichnet ist. Es versteht sich, daß die Messer 9 benachbarter Mähteller 8 die Überschneidungsstelle 12 versetzt hintereinander durchlaufen. Zwischen den Antriebszahnrädern 6 benachbarter Mähteller 8 befinden sich drei Zwischenzahnräder 13, 14 mit ihren Achsen 15 und 16, wenn, wie in Fig. 2 rechts ersichtlich, die beiden benachbarten Antriebszahnräder 6 ihre Mähteller 8 gleichsinnig entsprechend den Pfeilen 17 antreiben sollen. Hinsichtlich der Überschneidungsstelle 12 wirkt sich hier nur das Zwischenzahnrad 14 aus, nicht die benachbart zu ihm angeordneten Zwischenräder 13. Aus diesem Grunde ist auch nur die Achse 16 des Zwischenzahnrades 14 entgegen der Fahrtrichtung gemäß Pfeil 11 am Tragbalken nach rückwärts versetzt, wie dies auch aus Fig. 1 ersichtlich ist. Dieser Versatz nach hinten gestattet es, den von den Zwischenzahnrädern 13, 14 nicht überstrichenen, nach vorn weisenden Bereich der Wanne 2 rampenförmig mit einer Einbeulung 18, von der die Knicklinie in Fig. 2 gestrichelt dargestellt ist, zu verformen, und zwar derart, daß unterhalb der Einbeulung 18 ein Freiraum 19 entsteht, durch den Erde entgegengesetzt zur Fahrtrichtung gemäß Pfeil 11 von vorn nach hinten unter dem Tragbalken 1 hindurchtreten kann. Es ist ersichtlich, daß die Einbeulung 18 (Fig. 1) relativ langgezogen ausgebildet ist, gerade so, wie es der Kopfkreis des Zahnrades 14 noch zuläßt. Damit wird angestrebt, daß die Einbeulung 18 gegenüber der Kontur des Bodens 20 möglichst lang und rampenartig verläuft, damit sich an der Einbeulung 18 kein Erdkeil aufbauen kann. In Fig. 1 ist noch angedeutet, daß am nach vorn weisenden Doppelrand 4, 5 der Tragbalkens 1 eine Gleitschale 21, etwa um die Achse 7 der Antriebszahnräder 6 sich erstreckend vorgesehen sein kann, an der wiederum eine Gleitsohle 22 befestigt sein kann, die sich unter der Wanne 2 hindurch erstreckt und im Bereich des hinteren Doppelrandes 4, 5 zusätzlich abgestützt ist. Diese Gleitschale 21 und die Gleitsohle 22 schützen eine stufig gekantete Stirnwand 23 der Wanne 2, die sich im Anschluß an die Einwölbungen 18 unter jedem Mähteller erstreckt. In Fig. 1 ist schematisch durch eine Bodenkonturlinie 24 zugleich dargestellt, daß der gesamte Tragbalken 1 mit den Mähtellern 8 nach vorn unten geneigt angeordnet werden kann, so daß vorteilhaft die Schnitthöhe erniedrigt wird und vor allen Dingen die Einbeulung 18 dann noch flacher verläuft, d. h. der Freiraum 19 sich entgegengesetzt zur Fahrtrichtung gemäß Pfeil 11 noch weniger verengt.

Fig. 2 läßt im linken Bereich erkennen, daß zwischen zwei benachbarten Antriebsrädern 6, die gegensinnig umlaufen gemäß den Pfeilen 17 und 25 angetrieben werden sollen, zwei Zwischenzahnräder 26 mit ihren Achsen 27 vorgesehen sind. Auch die Achsen 27 sind gegenüber den Achsen 7 entgegengesetzt zur Fahrtrichtung gemäß Pfeil 11 zurückversetzt, so daß die Wanne 2 in dem Bereich hinter dem nach vorn gekehrten Zwickel der Überschneidungsstelle 12 ebenfalls eine Einbeulung 28 aufweisen kann, unter dem sich ebenfalls ein Freiraum 29 befindet. Die Kontur verläuft hier etwas anders als an der Einbeulung 18, was jedoch durch die Kopfkreise der Zwischenzahnräder 26 bestimmt wird. Durch die Zwischenzahnräder 26 wird gleichzeitig die Breite des Tragbalkens 1 festgelegt.

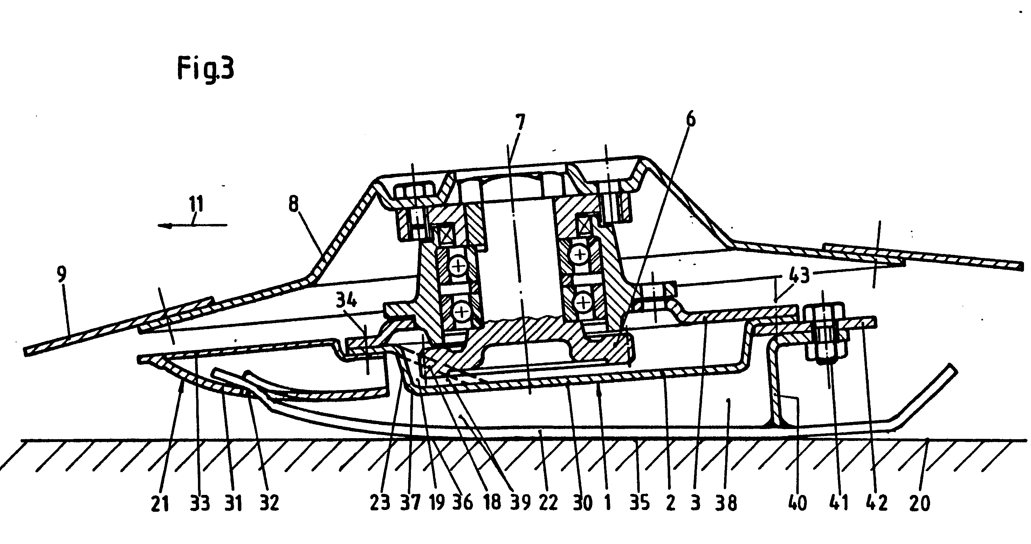

Fig. 3 zeigt eine ähnliche Darstellung wie Fig. 1 an einer weiteren Ausführungsform, aus der auch weitere konstruktive Einzelheiten ersichtlich sind. Es ist zunächst einmal ersichtlich, wie dem Tragbalken 1 mit seiner Wanne 2 und dem Deckel 3 und die Achsen 7 der Antriebszahnräder 6 und der Mähteller 8 nach vorn unten leicht geneigt gegenüber dem nicht dargestellten Rahmen des Tellermähwerks angeordnet sind. Der Winkel der Achse 7 zur Vertikalen und damit auch der Winkel der dem Boden 20 zugekehrten Oberfläche 30 der Wanne 2 mit der Horizontalen bzw. dem Boden 20 beträgt etwa 4°. Auch dieses trägt dazu bei, die Einbeulung 18 noch flacher und damit der Horizontalen angenäherter anzuordnen bzw. gegenüber dem Boden 20 zu führen. Gleichzeitig erreichen die Messer 9 im Schneidbereich eine relativ niedrige Lage, also einen geringen Abstand zum Boden 20, so daß damit eine vorteilhaft niedrige Schnitthöhe erzielt wird. In den Bereichen, in denen die Wanne 2 die Stirnwand 23 aufweist, ist sie durch Gleitschalen 21 geschützt und abgedeckt, so daß sich an der Stirnwand 23 keine Erdkeile aufbauen können.

Die Gleitschale 21 besitzt in ihrem unteren Bereich eine Kufenschale 31 und in dieser eine Durchbrechung 32, durch die das vordere Ende der Gleitsohle in den Innenraum der Gleitschale 21 eingesteckt werden kann. Oben weist die Gleitschale 21 ein Abdeckblech 33 auf, welches die aus Fig. 3 ersichtliche Formgebung besitzt. Die Gleitschale 21 kann mit dem Doppelrand 4, 5 mehrfach verschraubt werden, wobei durchaus die gleichen Schrauben benutzbar sind, die auch die Ränder 4 und 5 zusammenhalten. In Fig. 3 ist an dieser Stelle nur die Achse 34 angedeutet.

Die Gleitsohle 22 besitzt über ihre Länge quer zu dem Tragbalken 1 etwa konstante Breite und die aus Fig. 3 ersichtliche Formgebung, d. h. sie besitzt einen relativ langgezogenen Aufstandsbereich 35, dessen vorderster Punkt 36 nahebei oder sogar vor der unteren und damit tiefsten Kante 37 der Wanne 2 liegt. Fig. 3 zeigt die Stellung, bei der der Rahmen des Scheibenmähwerks senkrecht ausgerichtet am Schlepper geführt ist. Es ist ersichtlich, daß über die Oberlenker eine noch mehr nach vorn unten geneigte Anstellung möglich ist, wobei der untere Auflagepunkt der Gleitsohle 22 ausgehend von dem Punkt 36 nach links und damit in Fahrtrichtung 11 weiter nach vorn und schließlich vor die Kante 37 der Wanne 2 zu liegen kommt. Dies bedeutet, daß die Einbeulung 18 noch weniger geneigt zur Horizontalen angestellt wird, und sich der Freiraum 19 noch weniger entgegengesetzt zur Fahrtrichtung 11 verengt. Darüberhinaus ist die Gleitsohle 22 mit deutlichem Abstand 38 zu der Oberfläche 30 der Wanne 2 angeordnet, so daß durch diese Maßnahme der Freiraum 19 zu einem erheblich größeren Freiraum 39 vergrößert wird, durch den hindurch ein ungehinderter Abfluß von Erdreich, auch bei Auftreten eines Maulwurfhügels o. dgl., möglich ist. Ein Abstandshalter 40 und eine Schraube 41 mit Mutter ermöglichen die Befestigung der auswechselbar eingesetzten Gleitsohle 22 im hinteren Bereich des Tragbalkens. Hierzu ist zweckmäßig ein Abstützblech 42 an der Wanne 2 angeschweißt, so daß die Schrauben 41 zusätzlich zu den den Doppelrand 4, 5 in diesem Bereich abdichtenden Schrauben, von denen nur eine Achse 43 angedeutet ist, angeordnet sind. Dies bedeutet, daß bei einem Auswechseln der Gleitsöhlen 22, die einem erhöhten Verschleiß unterliegen, der Deckel 3 von der Wanne 2 nicht gelöst werden muß.

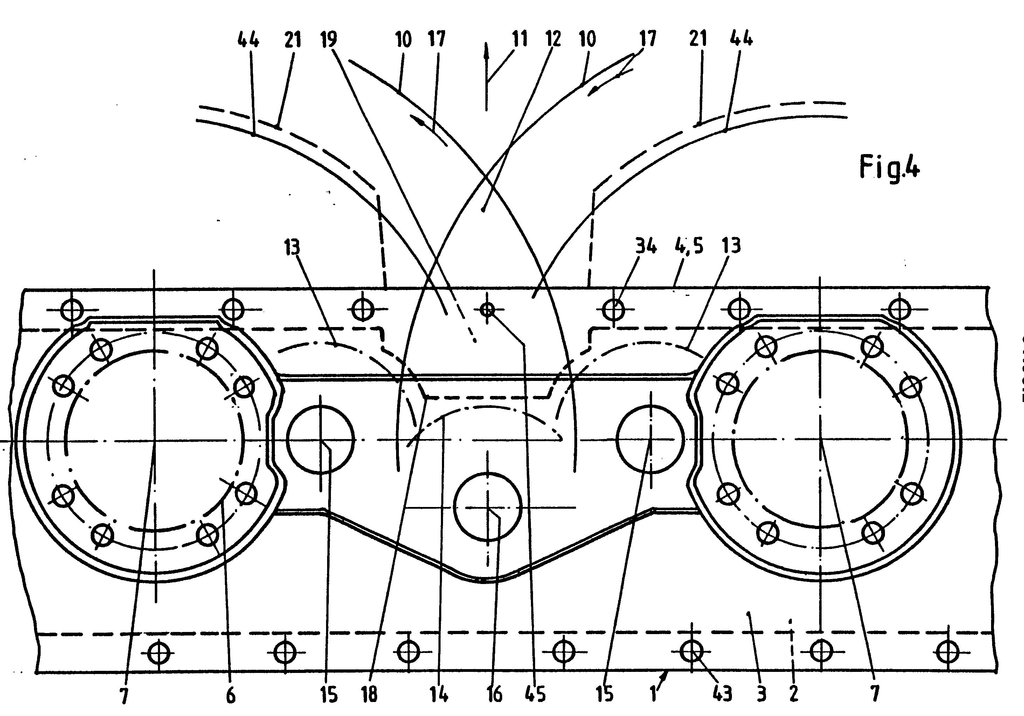

Aus Fig. 4 sind die Verhältnisse aus dem rechten Teile der Fig. 2 noch einmal genauer dargestellt. Es ist eine Draufsicht auf den Tragbalken 1 von oben, also auf den Deckel 3 mit darunter befindlicher Wanne 2 gezeigt. Die Fahrtrichtung ist wieder durch den Pfeil 11 angegeben. Die Umlaufkreise 44 der Mähteller 8 und die Schneidkreise 10 der Messer 9 sind teilweise dargestellt. In gestrichelter Linienführung ist die Kontur der Gleitschalen 21 eingezeichnet. Es ist ersichtlich, wie diese Gleitschalen 21 im Bereich des Zwickels bzw. der Überschneidungsstelle 12 abgeschnitten sind, damit die Gleitschalen 21 den freien Durchtritt von Erdreich in dem Freiraum 19 unter der Wanne 2 hindurch nicht behindern. Die Zwischenzahnräder 13 und 14 sind mit ihren Achsen 15 und 16 und mit den Kopfkreisen der Verzahnung angedeutet. Hiernach richtet sich die Kontur der Einbeulung 18. Wichtig ist zunächst einmal, daß das Zwischenzahnrad 14 mit seiner Achse 16 gegenüber den Achsen 7 der Antriebsräder 6 nach hinten versetzt abgeordnet ist. Selbstverständlich bestünde auch die Möglichkeit, die Zahnräder 13 mit ihren Achsen 15 gegenüber den Achsen 7 etwas zurückzuversetzen, so daß dann beispielsweise die Achse 16 des Zwischenzahnrades 14 noch weiter nach hinten versetzt werden kann und damit die Einbeulung 18 in Fahrtrichtung 11 gesehen noch länger wird und sich der Freiraum 19 noch weniger entgegen der Fahrtrichtung gesehen verjüngt. In der Breite gesehen, also über die Länge des Tragbalkens 1 braucht die Einbeulung 18 natürlich nur so breit zu sein, wie ein Durchtritt von Erde an dieser Stelle möglich sein muß, d. h. andererseits so weit, wie es außerhalb der Gleitschalen 21 erfordedich ist.

Aus Fig. 4 ist auch ersichtlich, daß hinter der Überschneidungsstelle 12 ein vergleichsweise kleineres Durchgangsloch 45 vorgesehen ist, welches zur Aufnahme einer Niete bestimmt ist, während die übrigen Durchgangslöcher mit den Achsen 34 und 43 eine Schraube mit Mutter aufnehmen. Eine Vernietung bietet stirnseitig eine erheblich kleinere Fläche als eine Schraube mit Mutter und trägt damit dazu bei, daß dem entgegengesetzt zur Fahrtrichtung 11 hier durchtretenden Erdreich unter der Wanne 2 ein vergleichsweise geringerer Widerstand entgegengebracht wird. Auch oberhalb des Randes 5 wirkt sich eine Niete an dieser Stelle günstig aus, weil damit ein Widerstand für das hier über den Deckel 3 hinwegtretende Futter kaum erzeugt wird.

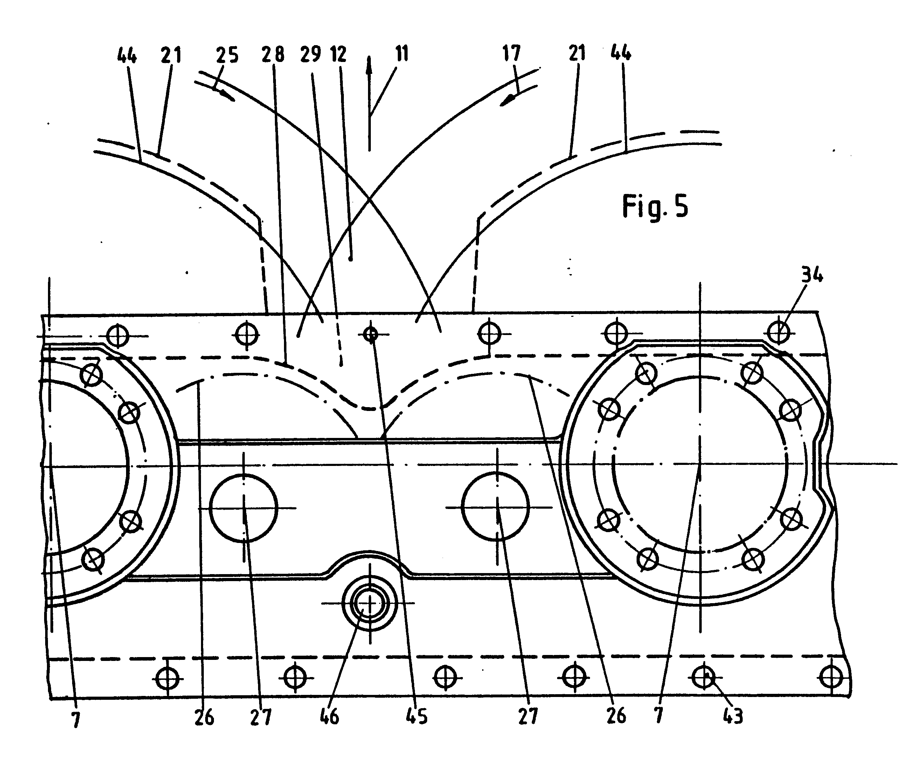

Fig. 5 zeigt ähnlich wie Fig. 4 die Verhältnisse am Tragbalken, jedoch an einer solchen Stelle, an welcher - ähnlich wie in Fig. 2 links - zwei gegenläufig gemäß en Pfeilen 17 und 25 drehende Mähscheiben um die Achsen 7 geordnet sind. Durch das Zurücksetzen der Achsen 27 der mit ihrem Kopfkreis dargestellten Zahnräder 26 gegenüber den Achsen 7 wird es auch an dieser Stelle möglich - freilich mit etwas geänderter Formgebung - eine Einbeulung 28 und ein Freiraum 29 an bzw. unter der Wanne 2 hinter der Überschneidungsstelle 12 anzuordnen. Hier muß ein Kompromiß gefunden werden zwischen dem Maß des Versatzes der Achsen 27 gegenüber den Achsen 7 und der Gesamtbreite des Tragbalkens 1. Je weiter die Achsen 27 nach hinten versetzt werden, desto länger in Fahrtrichtung 11 kann die Einbeulung 28 sein, desto breiter wird aber auch der Tragbalken 1. In diesem Bereich kann eine Öleinfüllschraube 46 für das Schmiermittelbad vorgesehen sein.

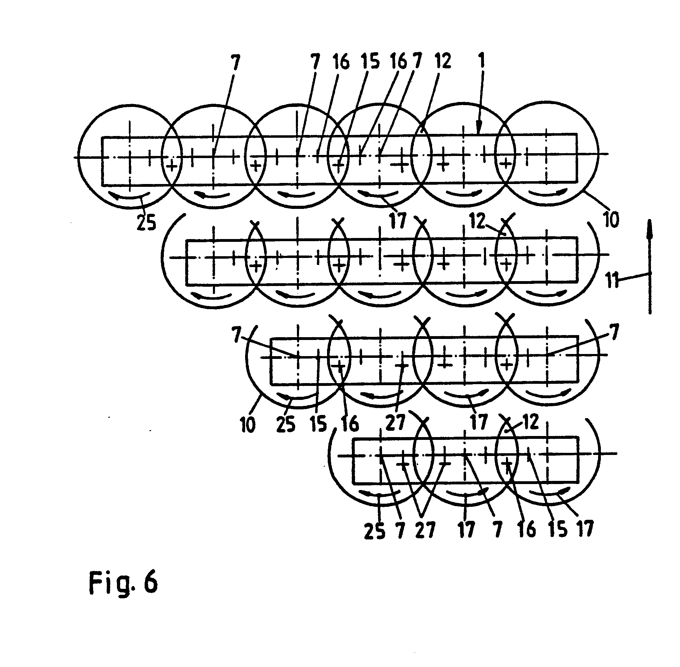

Fig. 6 zeigt in schematischer Weise den Versatz der Achsen der Zwischenzahnräder zu den Antriebszahnrändern und die gewählten Drehrichtungen der Mähteller 8 bzw. der Schrittkreise 10 für die wahlweise Anordnung von drei bis sechs Mähtellern nebeneinander, also für unterschiedlich breite Tellermähwerke.

**Patentansprüche**

1. Tellermähwerk mit über ineinandergreifende Zahnräder angetriebenen Mähtellern (8), die an ihrem Umfang durch Zentrifugalkräfte nach außen gerichtete Messer (9) tragen, und mit einem mit einem Rahmen verbundenen Tragbalken (1), der eine Wanne (2) und einen die Lagerung der Zahnräder bzw. der Mähteller tragenden Deckel (3) aufweist und ein Schmiermittelbad aufnimmt, wobei sowohl die in Fahrtrichtung nach vorn weisende Kante des Tragbalkens (1) als auch die rückwärtige Kante des Tragbalkens im wesentlichen geradlinig verlaufen, dadurch gekennzeichnet, daß die mit den Mähtellern (8) starr verbundenen Antriebszahnräder (6) in Fahrtrichtung (11), soweit es die stufig ausgebildete Wanne (2) zuläßt, nach vorn und die an der Überschneidungsstelle (12) benachbarter Messer (9) wirksamen Zwischenzahnräder (14 bzw. 26), soweit es die Wanne zuläßt, nach hinten auf dem Tragbalken (1) versetzt angeordnet sind, und daß der von den Zwischenzahnrädern (13, 14, 26) nicht überstrichene, nach vorn weisende Bereich der Wanne (2) rampenförmig verformt und an dieser Überschneidungsstelle (12) benachbarter Mähteller ein Freiraum (19 bzw. 29) für den Durchtritt von Erdreich unter der Wanne (2) hindurch vorgesehen ist.

2. Tellermähwerk nach Anspruch 1, dadurch gekennzeichnet, daß der Tragbalken (1) auf seinem am Schlepper zu befestigenden Rahmen in Fahrtrichtung nach vorn unten geneigt angeordnet ist.

3. Tellermähwerk nach Anspruch 1 oder 2, dadurch gekennzeichnet, daß in dem von den Mähtellern (8) vor dem Tragbalken (1) überstrichenen Bereich Gleitschalen (21) angeordnet sind, die einerseits die Überschneidungsstelle (12) freilassen und andererseits die im Bereich der Antriebszahnräder (6) stufig ausgebildete Wanne (2) abdecken, und daß jede Gleitschale (21) eine dem Boden (20) zugekehrte Kufenschale (31) aufweist, deren dem Boden zugekehrte Oberfläche an der Übergangsstelle zur Wanne (2) mit der dem Boden zugekehrten Oberfläche (30) der Wanne (2) fluchtet oder sogar nach unten vorsteht.

4. Tellermähwerk nach Anspruch 3, dadurch gekennzeichnet, daß die Gleitschale (21) im Bereich der Kufenschale (31) eine Durchbrechung (32) für den auswechselbaren Einsatz einer Gleitsohle (22) aufweist, die ansonsten abständig zur Wanne (2) des Tragbalkens (1) abgestützt ist.

5. Tellermähwerk nach Anspruch 3 und 4, dadurch gekennzeichnet, daß die Gleitsohle (22) eine solche Formgebung aufweist, daß bei zusätzlicher Schrägstellung des Tragbalkens (1) durch die Oberlenker des Schleppers der tiefste Punkt (36) der Gleitsohle (22) über den tiefsten Punkt (37) der Wanne (2) hinaus in Fahrtrichtung (11) nach vorn wandert.

6. Tellermähwerk nach Anspruch 3, dadurch gekennzeichnet, daß die Gleitschale (21) im Anschluß an die Überschneidungsstellen (12) von ihrer ansonsten etwa kreisbogenabschnittförmigen Begrenzung abweichend etwa geradlinig in Fahrtrichtung (11) abgeschnitten begrenzt ist.

7. Tellermähwerk nach Anspruch 6, dadurch gekennzeichnet, daß die Gleitschale (21) mit dem Doppelrand (4, 5) des Tragbalkens (1) aus Deckel (3) und Wanne (2) auswechselbar verbunden ist.

8. Tellermähwerk nach Anspruch 1 bis 3, dadurch gekennzeichnet, daß der Doppelrand (4, 5) des Tragbalkens (1) im Bereich der Überschneidungsstelle (12) durch eine Nietung verbunden ist.

**0 110 812**

**Claims**

1. Disc mower with cutter discs (8) which are driven by meshing gearwheels, and which carry cutters (9) at their peripheries, these cutters (9) being pointed outwards by centrifugal forces, and with a support beam (1) that is connected to a frame, this support beam possessing a sump tray (2) and a cover (3) that carries the bearings for the gearwheels and cutter discs, and containing a lubricant bath, both edges of the support beam (1), namely the one facing forwards, in the vehicle running direction, and the rear one, describing essentially straight lines, characterized in that the drive gearwheels (6), which are rigidly connected to the cutter discs (8), are installed on the support beam (1) at locations that are offset forwards, in the vehicle running direction (11), as far as the sump tray (2) allows, this sump tray exhibiting a stepped configuration, and the intermediate gearwheels (14 or 26), which function at the locations (12) where neighbouring cutters (9) overlap, are installed on the support beam (1) at locations that are offset rearwards, as far as the sump tray allows, and in that the forward-pointing sump tray zone over which the intermediate gearwheels (13, 14, 26) do not extend is deformed to a ramp-like shape, and an unobstructed space (19 or 29) is provided at these locations (12) where neighbouring cutter discs overlap, the purpose of this unobstructed space (19 or 29) being to permit earth to pass through, beneath the sump tray (2).

2. Disc mower according to Claim 1, characterized in that the support beam (1) is installed on its frame in a manner such that it is inclined downwards in the forward, vehicle running direction, the frame being designed for attachment to the tractor.

3. Disc mower according to Claim 1 or 2, characterized in that guide shells (21) are installed in the zone over which the cutter discs (8) extend in front of the support beam (1), these guide shells (21) leaving the overlap locations (12) unobstructed, on the one hand, and screening the sump tray (2), on the other hand, the sump tray exhibiting a stepped configuration in the region of the drive gearwheels (6), and in that each guide shell (21) possesses a skid dish (31), which faces the ground (20), while at the transition to the sump tray (2), that surface of the skid dish which faces the ground is flush with that surface (30) of the sump tray (2) which faces the ground, or is even proud of that surface (30) in the downward direction.

4. Disc mower according to Claim 3, characterized in that there is a through hole (32) in the guide shell (21), in the region of the skid dish (31), this hole (32) being intended for the insertion of a sliding shoe (22), in a manner such that it can be replaced, this sliding shoe (22) otherwise being supported at some distance from the sump tray (2) of the support beam (1).

5. Disc mower according to Claims 3 and 4, characterized in that the sliding shoe (22) is shaped in a manner such that if the tractor-mounted upper attachment arm sets the support beam (1) to a steeper inclination, the lowest point (36) of the sliding shoe (22) will shift forwards, in the vehicle running direction (11), to beyond the lowest point (37) of the sump tray (2).

6. Disc mower according to Claim 3, characterized in that in the immediate vicinity of the overlap locations (12), the surface bounding the guide shell (21) is cut away in the vehicle running direction (11), in an approximately straight line, departing from the shape of the remainder of this bounding surface, which approximates to a segment of a circular arc.

7. Disc mower according to Claim 6, characterized in that the guide shell (21) is connected to the double edge (4, 5) of the support beam (1), formed by the cover (3) and the sump tray (2), this connection being effected in a manner such that the guide shell (21) can be replaced.

8. Disc mower according to any of Claims 1 to 3, characterized in that the double edge (4, 5) of the support beam (1) is riveted together in the region of the overlap location (12).

**Revendications**

1. Mécanisme de faucheuse à disques comportant des disques de fauche (8) entraînés par des roues dentées en prise mutuelle, qui portent sur leur pourtour des couteaux (9) dirigés vers l'extérieur par les forces centrifuges, comportant une poutre de support (1) reliée à un châssis présentant un carter (2) et un couvercle (3) qui supporte les paliers des roues dentées, respectivement des disques de fauche et qui englobe un bain de moyen de lubrification, le bord tourné vers l'avant dans le sens du déplacement ainsi que le bord arrière de la poutre de support s'étendant de façon sensiblement rectiligne, caractérisé par le fait que les roues dentées d'entraînement (6) reliées de façon rigide aux disques de fauche (8) sont disposées sur la poutre de support (1) de façon décalée vers l'avant dans le sens du déplacement, autant que le permet le carter qui a une conformation étagée, et que les roues dentées intermédiaires (14, respectivement 26) qui agissent dans la zone d'intersection (12) de couteaux voisins (9), sont disposées décalées vers l'arrière sur la poutre (1) de support, autant que le permet le carter et que la zone du carter (2) tournée vers l'avant, non couverte par les roues dentées intermédiaires (13, 14, 26) revêt la forme d'une rampe et qu'un espace libre (19, 29) est prévu dans cette zone d'intersection (12) de disques de fauche voisins pour permettre le passage de la zone de sol située sous le carter (2).

2. Mécanisme de faucheuse à disques selon la revendication 1, caractérisé par le fait que la

8

poutre (1) de support est disposée de façon inclinée vers le bas dans la direction de l'avant dans le sens du déplacement, sur son châssis qui doit être fixé au tracteur.

3. Mécanisme de faucheuse à disques selon la revendication 1 ou 2, caractérisé par le fait que des coquilles de glissement (21) sont disposées dans la zone située devant la poutre de support (1) couverte par les disques de fauche (8), lesquelles coquilles d'une part laissent libre le point d'intersection (12) et d'autre part recouvrent, dans la zone des roues dentées d'entraînement (6), le carter (2) conformé de façon étagée, et que chaque coquille (21) présente une coquille-patin (31) tournée vers le sol dont la surface tournée vers le sol affleure la surface (30) tournée vers le sol du carter (2) à la jonction avec le carter (2), ou même fait saillie vers le bas.

4. Mécanisme de faucheuse à disques selon la revendication 3, caractérisé par le fait que la coquille de glissement (21) présente, dans la zone de la coquille-patin (31), un passage (32) destiné à la mise en place, de façon interchangeable, d'une semelle de glissement (22) qui par ailleurs est fixée avec un écart par rapport au carter (2) de la poutre (1) de support.

5. Mécanisme de faucheuse à disques selon la revendication 3 ou 4, caractérisé par le fait que la semelle (22) de glissement présente une forme telle que, lorsque la poutre (11) de support est placée de façon encore plus oblique grâce aux barres d'orientation du tracteur, le point le plus bas (36) de la semelle de glissement se déplace vers l'avant, dans le sens du déplacement (11) au delà du point le plus bas (37) du carter (22).

6. Mécanisme de faucheuse à disques selon la revendication 3, caractérisé par le fait que la coquille (21) de glissement se termine à l'endroit du raccordement avec la zone d'intersection (12) par une partie coupée de façon à peu près rectiligne dans le sens du déplacement (11) en s'écartant de la forme d'un arc de cercle que son contour possède par ailleurs.

7. Mécanisme de faucheuse selon la revendication 6, caractérisé par le fait que la coquille (21) de glissement est reliée de façon interchangeable au double bord (4, 5) de la poutre (1) de support, constitué par le couvercle (3) et le carter (2).

8. Mécanisme de faucheuse à disques selon les revendications 1 à 3, caractérisé par le fait que le double bord de la poutre (1) de support est assemblé au moyen d'un rivetage dans la région de la zone d'intersection (12).

# Fig.1

# Fig2

Fig.3

Fig.4

Fig. 5

0 110 812

Fig. 6